# EUROPEAN PATENT SPECIFICATION

(11) **EP 2 516 300 B1**
(45) Date of publication and mention of the grant of the patent: **25.01.2017**
(21) Application number: 10839883.5
(22) Date of filing: 21.12.2010
(51) Int. Cl.: B65G 51/28, B65G 51/04

(54) **DEVICE AND METHOD FOR AUTOMATIC HANDLING OF OBJECTS IN A PNEUMATIC TRANSPORT SYSTEM**
VORRICHTUNG UND VERFAHREN ZUR AUTOMATISCHEN HANDHABUNG VON GEGENSTÄNDE IN EINEM PNEUMATIK-TRANSPORTSYSTEM
DISPOSITIF ET MÉTHODE DE MANIPULATION AUTOMATIQUE D'OBJETS DANS UN SYSTÈME DE TRANSPORT PNEUMATIQUE

(30) Priority: 22.12.2009 SE 0901604
(43) Date of publication of application: 31.10.2012
(73) Proprietor: Graniten Engineering AB, 451 50 Uddevalla (SE)
(72) Inventor: TABARTE, Mahmod, SE-455 30 Munkedal (SE); ANDERSSON, Mats, SE-453 40 Lysekil (SE); ERIKSSON, Karl, SE-451 91 Uddevalla (SE); HORLITZ, Oliver, SE-451 73 Uddevalla (SE); NILSSON, Inge, SE-451 92 Uddevalla (SE); SKARIN, Lars, SE-451 51 Uddevalla (SE)
(74) Representative: Leonhard, Frank Reimund
(86) International application number: PCT/SE2010/000313
(87) International publication number: WO 2011/078762

(56) References cited:
- EP-A1- 1 052 202
- GB-A- 2 211 825
- JP-A- 2007 045 599
- US-A- 4 620 577
- US-A- 4 620 577
- US-A- 5 988 951
- US-A1- 2008 232 908
- US-B1- 6 625 958

## Description

The present invention concerns a method and a device for automatic handling of objects suitable for transport by pneumatic tube transport systems.

Pneumatic tube transport systems are often used by organisations (e.g. administrations, warehouses and hospitals) with various departments that are physically close to each other. Small objects can be rapidly sent from one department to another by the sender putting the objects into a cylindrical capsule (carrier) and then sealing, addressing and dispatching this via the tube transport system's outgoing tube. Documents, money and other small objects can all be sent in this way.

In hospitals, there is a need for the rapid transport of samples and pharmacy items. A tube transport system is particularly suitable for this. In particular, large quantities of medicine and other pharmacy items (e.g. ampoules, sprays and syringes) are handled. They have to be transported (with short delivery times) from the hospital's pharmacy to a large number of patients. The requirements for safety and efficiency are stringent. Manual handling has been increasingly replaced by automated medicament handling systems such as that on the market under the PillPick tradename. This is a form of automated pharmacy with two output units. Medicine and other items are ordered (via computer) by a hospital department for a certain patient. The automated pharmacy collects the items from an internal store and packs them in plastic bags that are sealed and have a hole towards the top. When all the items for a patient have been collected, the plastic bags for this patient are bundled together using a plastic wire that is then welded to form a ring. If the number of plastic bags exceeds a certain maximum number, the bags are shared between several rings. Each ring also has a label with graphic information on the patient's identity.

The automated pharmacy physically delivers a ring with bags (suspended on a hook) to one of the output units. At the same time, the address of the department receiving the ring is supplied in a digital format, as also is information about the next ring's address. The capacity of each output unit is up to three rings a minute. These rings then have to be transported to the receiving department. This can advantageously be done using a pneumatic tube transport system for capsules. In each department, there is one tube for incoming, and one for outgoing, capsules. The capsules are cylindrical and have openable end pieces. On each capsule, there is an electronic information carrier (e.g. a transponder) in which the capsule's identity is stored. It is thus possible to manually pack a capsule with the rings that are going to a department, address it and put it in the tube for outgoing capsules. The tube transport system then sends this to the correct department via a system of tubes with branches and "switches". The latter are set using information from the transponder.

Such manual handling with its receiving, opening and filling of capsules with the correct objects and, finally, sending the capsules to the correct addresses is, however, costly and unsure. This is especially true of the large quantities of items from automated pharmacies. For this reason, a plant for automatically handling the rings between the automated pharmacy and the tube transport system was developed. In principle, this plant comprises: two separate suspended transport lines (receiving from the automated pharmacy); and, filling equipment with capsule handling. Each line works to is own output unit in the automated pharmacy. Hanging from the lines, there are load carriers at approximately 2.4 m from the plant floor. Each line has space for a total of 230 load carriers, some of these being loaded and placed in a queue while others are waiting to be loaded. The load carrier comprises a simple hook with a built-in transponder.

On reception from the automated pharmacy, the load carrier is fixed by a clamp and the automated pharmacy then delivers a ring to the hook. Next, there is a signal exchange with address transmission to the load carrier's transponder. The load carrier is then carried away on its line and queued for handling by the filling station. The filling station has a buffer track with space for up to ten empty capsules. Vertically via a skid rail from the tube transport system's tube for incoming capsules, the capsules arrive at an arrival position that has damping. Each capsule is then forced into the buffer track and then stepped forwards to a position where a gripping device collects it and places it in a filling position. There, the capsule is rotated so that the upper lid can be pushed to one side.

The capsule is now ready to receive a number of rings and their address. The load carrier that is at the head of the queue is taken to a position directly over the empty capsule. There, the load carrier's hook is fixed by a clamp and the transponder's address is read. A gripping device with two gripping halves then encircles and clamps the bags together immediately under the ring. When the hook has been unhooked from the ring, the entire gripping device (along with the ring) is turned 180° around a horizontal axis. Finally, the gripping halves are opened and the ring with the bags falls down into the capsule. The gripping device then returns to the start position. For the same capsule, this procedure can then be repeated with several rings.

At capsule filling, the address from the load carrier's transponder is linked to the capsule's identity (which is read from its transponder). To be able to close the capsule lid safely, there must be a check of "filling status". A sweeping laser photocell that registers protruding bags (i.e. "overfilling") is used for this. If no overfilling is registered, a piston pushes the lid to the closed position and the capsule is transported to the tube transport system's tube for outgoing capsules. In connection with this, information about the address and the capsule's identity is sent to the tube transport system. If there is overfilling, a compressing brush is pushed (from above) down into the capsule. A new overfilling check is then run and, if the filling status is approved, the lid is closed and the capsule is ready for dispatch. If the check does not approve the filling status, the capsule is moved to an error track (for manual correction).

The plant described above is automatic and enables the handling of the volumes produced by both output units of the automated pharmacy. However, this plant concept has a number of fundamental disadvantages that jeopardise patient safety and otherwise also result in functional shortcomings. As the first of these, it can be pointed out that the load carriers hooks are open and the rings can thus easily fall off the suspended transport line. This uncertainty remains until the load carrier has been discharged into a capsule. There can be up to four hundred load carriers in the waiting position. It is thus very difficult to monitor what is happening with an individual load carrier.

On top of this, the address is transmitted to the receiving department in two phases - first to the load carrier and then to the capsule. Compared to being able to transmit the address directly from the automated pharmacy to the capsule, this increases the risk of incorrect addressing.

Furthermore, capsule filling is problematic because the rings and their bags are discharged above a capsule and have to drop into this. Accommodating several rings is difficult as they easily become entangled with each other. Yet another disadvantage with the procedure is that a stamp is used to press the bags down into the capsule. This can damage the materials, especially when ampoules or similar are being delivered. Consequently, the filling principle requires acceptance of a relatively low degree of filling and, in turn, the sending of several capsules to the same address. It may finally be pointed out that the plant's flow is entirely linear and requires a great deal of space.

EP 1052.202 A1 (Zanchetta & C. S.r.l.) discloses a method according to the preamble of claim 1 and explains in depth a pharmaceutical chemical transfer system that uses pneumatic transport medium, see column 2, para. [0012], and column 3, para. [0020] and [0021]. There, the tablets are manufactured in a compressing machine 3, they are transferred to a first loading device 9, where the tablets are delivered to a first determined route 15 by a sealed pneumatic transfer means 13 which connects to a second off-loading device 14, where the tablets arrive after having been transferred in pneumatic surrounding along said "determined route" 15. There, in the off-loading station 17, the tablets (determined or denoted 2) are contained inside a case and are off-loaded to the utilizing unit 4, where they are packed in for example blistering packaging. This device would not import the tablets 2 into intermediate capsules that are transported by pneumatic transfer systems. Such a shuttle is instead shown in US 4,620,577 (Nordenswan) in figures 4a, 4b thereof, having two opposed openings that are each closed by a flap 9 from inside and being under spring-load 11, see column 3, lines 32 to 46.

**The purpose (and object)** of the claimed invention is that it is possible, without intermediate storing, to receive and transport small objects in a capsule (e.g. packed in a carrier that has a grip lug) to a filling station for a tube transport system.

A further purpose is that the invention should result in a device that ensures safe filling of small objects into capsules for tube transport systems.

Yet another purpose is that the invention should result in a device that ensures safe transport of small objects to a filling station for tube transport systems, and safe packing of such objects into the tube transport system's capsules.

These purposes are achieved by claim 1 (as method) and claim 8 (as device).

The claimed invention results in an automated method for simultaneously effecting various handling operations in respect of capsules for tube transport systems. The dependent claims cover advantageous options.

The invention will now be described in greater detail with reference to figures, intended to support the invention's understanding but not to limit the claim's reading.
**Fig.1** is a relatively detailed picture of a device, viewed in perspective obliquely from above, as first example.
**Fig. 2** is a more general picture of vital parts of fig. 1, viewed from another perspective obliquely from above, the figure being "read" from the right side of the page.
**Fig. 3** is showing vital parts of a capsule manipulator (with open gripping devices), viewed in perspective obliquely from above.
**Fig. 4** is a capsule manipulator of figure 3 with the gripping devices in closed positions.
**Fig. 5** is showing vital parts of a picker, viewed in perspective obliquely from above, the figure being "read" from the right side of the page.
**Fig. 6** is a gripping device of the picker of fig. 5, said gripping device being in an open position to receive a ring and its items, the whole being viewed in perspective obliquely from above and the figure being "read" from the right side of the page.
**Fig. 7** is showing the gripping device of fig. 6 in a closed position.
**Fig. 8** is showing the gripping device of figs. 5 and 6 in a closed position ready to discharge a ring and its items, viewed from another perspective obliquely from above.
**Fig. 9** is showing the gripping device of fig. 8 in an open position when a ring and its items have been discharged to a loader.
**Fig. 10** is a partial side view showing parts of the picker's gripping device (as in fig. 9) and parts of a loader's gripping device in a position where the ring and its items have been discharged to the loader's gripping device. Parts of a capsule transfer device are also shown.
**Fig. 11** is a partial view (oblique from the side) showing the lower part of the loader's arm and its gripping device.
**Fig. 12** is a side view showing the lower part of the loader's arm and its gripping device. The gripping device is in an open position and has received a ring and its items. The lower part of a capsule is also shown schematically (as a cut-away).
**Fig. 13** shows the gripping device in figure 12 in a closed position with a ring and its items on their way up into the capsule.
**Fig. 14** shows the gripping device in figures 12 and 13 in an open position for discharging the ring and its items inside the capsule.
**Fig. 15** shows, schematically from above, a device for the automatic emptying of capsules.

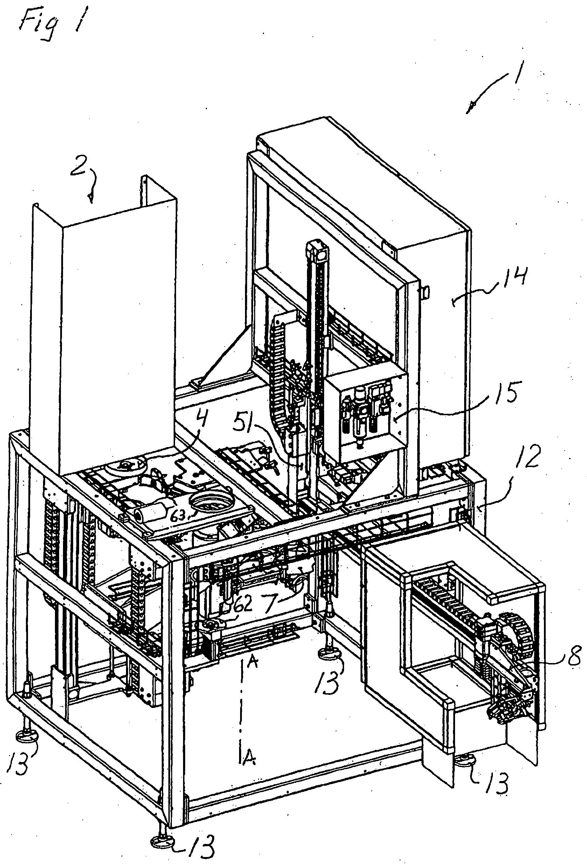

The device 1 in fig. 1 includes three logical units, a picker 8, a capsule manipulator 7 and a loader 51, these units working with each other so that small items packed in a carrier that has a grip lug can, automatically and with great safety/reliability, be packed into capsules and dispatched via tube transport systems. These units are preferably integrated using a stand 12. The entire device fits in a floor area of approximately 2 m x 2 m and, consequently, is easily sited. The stand 12 can include feet 13 a control cabinet 14 and a connection cabinet 15 for compressed air. The control cabinet 14 includes PLC control equipment that processes incoming signals from the device's various sensors and sends control signals to the device's various drive units. The design of such control lies within the framework of known technologies and will not be described any further. The figure also shows a cabinet 2 that includes a tube for incoming capsules from the tube transport system. There is an input station 4 under this tube. Figure 1 further shows a tube connection 63 for outgoing capsules to the tube transport system. There is an output station with a capsule holder 62 under this tube connection. A capsule manipulator 7 can also be glimpsed in this figure, which further shows a picker 8. Although the figure has been cleared of many details that are in the nature of standard components, a number of such details (e.g. cable chains, cable trays, pneumatic connections and fastening elements) are shown. This renders the figure difficult to follow at a glance and conceals how the device (as per the invention) functions. In the further descriptions, these details, as well as the stand 12 and certain fasteners, are omitted or only briefly explained. This is because their function is obvious for professionals in the area.

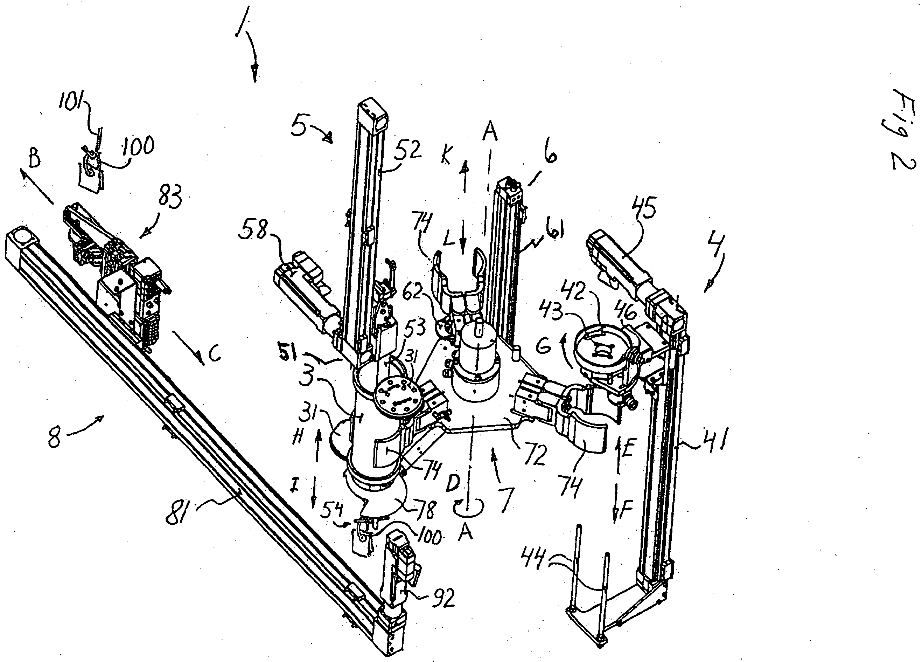

Fig. 2 more clearly shows the most important units and their mutual relationship. The picker 8 includes a transfer unit 81, preferably a linear transfer device with a servomotor 92. Using this transfer unit 81, a gripping device 83 can be moved in the direction of arrow B and collect a ring 100 on which there are one or more plastic bags containing pharmacy items. The previously described automated pharmacy's output unit delivers these rings one by one on a hook 101. In conjunction with this, information about the delivery address is transferred electronically from the automated pharmacy to an information receiving unit included in the device 1. Information regarding whether the following ring is to go to the same address is also transferred. In this respect, the automated pharmacy can be regarded as an address-giving unit. In the direction of arrow C, the transfer unit 81 then moves the gripping device 83 to a position for discharging the ring 100 to the gripping device 54 of the loading station 5. The composition and function of the picker 8 and the loading station 5 are described in detail later on.

The design described here is intended to work with an automated pharmacy. For this reason, the gripping devices are adapted to receive and discharge rings (and their items). However, the gripping devices can easily be designed for other objects, e.g. a gripping device for a carrier with a grip lug is one possibility. In a hospital context, it may, for example, be a question of a cassette for blood samples, the cassette being designed to fit into a capsule for a tube transport system. The cassette may then conceivably.have various types of "grip fittings" (e.g. a grip lug), the geometry of which determines gripping device design, or a smooth and sealed surface that can be held tight by a suction cup or be so arranged that it can be gripped by a magnet (or gripped in any other way) so that the invention concept (which will be described in greater detail) can be exploited.

Figure 2 also shows the capsule manipulator 7. This includes a rotary table 72 with gripping devices 74 designed to grip and transport capsules 3 that are designed for a tube transport system. In the direction of arrow D, the rotary table can be rotated around a vertical axis A-A, thereby transferring a capsule from an input station 4 to a loading station 5 and, finally, to an output station 6. Because the device operates continuously, three capsules are handled simultaneously. One capsule is fed in from the tube transport system and prepared for loading, one capsule is loaded and prepared for output and one capsule is fed out into the tube transport system. However, for the sake of easy comprehensibility, figure 2 shows only the capsule 3 at the loading station 5. Both end pieces 31 of the capsules 3 can be turned around their individual axes, which are parallel with axis A-A in the figure. As shown in the figure, the pivot axes of these end pieces are offset 180° (relative to each other). Near to each capsule end piece, there is a metal piece at a set angle (relative to said pivot axes). As set out in the explanation below, these metal pieces are designed for angle detection. The capsules can then be handled regardless of their angular orientation. Each capsule 3 also includes a transponder for electronic storage of the capsule's identity.

From the tube transport system, the capsules come to an input station 4 and are positioned with either end piece 31 on a plate-shaped capsule holder 42 that is mounted on a transfer unit 41, preferably a linear transfer device driven by a servomotor 45. In this way, the capsule holder can be moved to the desired position (in the direction of arrows E and F). Using a vacuum suction cup 43, the end piece is sucked securely to the capsule holder 42. The capsule holder 42 is then in its upper position, as shown in the figure. Next, the capsule holder is moved downwards in the direction of arrow F. Simultaneously with this movement, the capsule holder is rotated (using a turning device) in the direction of arrow G until the end piece hinges are at such an angle that the end pieces can be opened. This rotation is controlled using an inductive sensor 46 that registers the position of the metal piece. Other principles for positional detection of the capsules' angles are, of course possible, e.g. optical sensors could be used. In the event that a capsule cannot be turned to the correct position, it is transported downwards (in the direction of arrow F) to a lower position where it is ejected by the ejectors 44. If it has been possible to turn the capsule 3 to the correct position, it is then placed at a certain height. There, the gripping device 74 is manoeuvred to a closed position (as shown in the figure) so that the capsule 3 is held fast. The capsule holder is then moved further downwards (in the direction of arrow F) to leave room for opening the lower end piece. Over and under the gripping device 74, there are end piece opening organs on the stand 12. Said organs are preferably pneumatic linear transfer devices that push out both end pieces so that they are turned 180 degrees to an open position. The capsule 3 is now ready to be moved by the gripping device 74 to the loading station 5.

Simultaneously with this, the loading station 5 has loaded the preceding capsule 3 with items. Said loading is effected as follows. The loading station 5 includes a loader 51 and a collecting device 78. The loader 51 includes a transfer unit 52. Using this latter, a gripping device 54 can be moved in through one of the end piece openings of the capsule 3 and, in order to be able to grip an object, out through the other end piece opening of the capsule 3. It is preferred that the transfer unit should be a linear transfer device that has a slider which is mobile in the directions of arrows H and I, said slider being driven by a servomotor 58. It is further preferred that the gripping device 54 should be on an arm 53 attached to the linear transfer device's slider, the gripping device 54 being thereby mobile in the directions of arrows H and I. At loading, the gripping device 54 moves from up to down (in the direction of arrow I) through the upper capsule opening and further downwards to below the lower capsule opening. In this position, the gripping device 54 is open so that it can receive objects that the picker 8 delivers to the gripping device. In the preferred design, these objects are, as previously set out, items packed in plastic bags and suspended on a ring 100. If several rings are to go the same address, the picker 8 collects these and delivers them to the loader's gripping device 54. When all the rings have been collected, the gripping device 54 closes and then moves upwards (in the direction of arrow H) into the capsule 3. The ring/rings 100 and their item bags are thereby drawn into the capsule. A funnel-shaped collecting device 78 arranged below the loader 51 item bags are pulled into the capsule 3 without catching on the capsule's edges.

Compared with previously known technologies, this filling procedure has several major advantages. The most important difference is that the item bags neither fall nor are pushed into the capsule. Instead, they are pulled in through one of the open end pieces of the capsule (using an organ that is inserted through the capsule's other open end piece). Because the ring and its item bags are mechanically locked to the gripping device 54 throughout the journey into the capsule, there is full control of capsule loading. In this way, a high degree of filling can be achieved without risk of damaging the items. There is also full control of the item bags' position in the capsule so that no items protrude from the capsule. This means that there is no need to run an overfilling check and the end pieces can be freely closed.

When the items are entirely inside the capsule, the lower end piece is closed and the gripping device 54 then opens and moves upwards (in the direction of arrow H) to a position where the gripping device is above the capsule. The upper end piece is then closed. Both the end pieces 31 are closed using end piece closing organs, preferably pneumatic linear transfer devices that are arranged on the stand 12. These push both the end pieces so that they are turned 180 degrees to a closed position. When the capsule is in this position, information about the capsule's identity is read (using a reading unit) from its transponder and combined with the address information from the automated pharmacy. Via a cable, this combined information is sent to the tube transport system. When the capsule is being fed out and put into the tube transport system, the system reads the capsule's identity and guides it to the receiving address. With no intermediate phase, the address information is thus linked to capsule identity. This considerably reduces the risk of incorrect addressing and, compared with previously known technologies, is a significant advantage.

Simultaneously with feeding in and loading, there is the feeding out of the previously loaded capsule, which is now at the output station 6. This latter includes a transfer unit 61, preferably a linear transfer device. Using said unit, a plate-shaped capsule holder 62 can be moved vertically in the directions of arrows K and L. The output station is got ready to feed out a capsule by the capsule holder being moved (in the direction of arrow L) to a lower, neutral position so that, using the rotary table 72, a loaded capsule 3 can be rotated over the edge of the capsule holder 62. When the capsule is directly above the capsule holder, the capsule holder is moved (in the direction of arrow K) to a position immediately under the capsule's lower end piece. The gripping device 74 of the capsule manipulator 7 can then be opened so that the capsule rests solely on the capsule holder. Finally, the capsule holder with the capsule 3 is pushed upwards into the output tube of the tube transport system. To effect these vertical transfers between three fixed positions, two series-connected, pneumatic, linear transfer devices can preferably be used. However, a servo-controlled linear transfer device is, of course, another possibility.

Seen as a whole, the entire handling concept embodied in the invention entails a very high level of safety. This is because all rings with pharmacy items dispensed from the automated pharmacy are loaded directly into a capsule with no intermediate storage and the rings' address information is linked directly to the capsule's identity. Hence, there is full control of all handling of each individual ring and its items. The handling concept further entails a continuous flow with only a few rings in circulation at any one time. Besides a very high level of patient safety, large savings on equipment are also achieved in comparison with previously known technologies. An automated pharmacy with two output units can be served by two devices as per the present invention. Because these devices fit in a relatively small floor area, there is, compared with previously know technologies, a great saving in floor space.

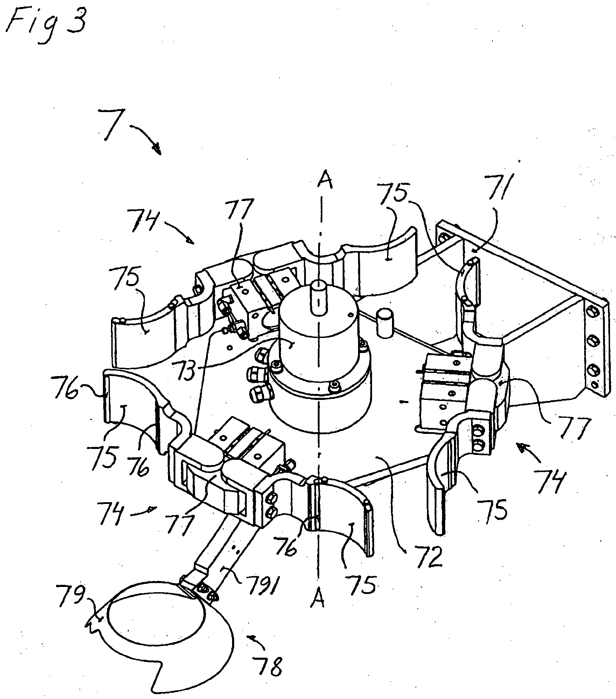

Vital parts of the device will now be described in greater detail. Figure 3 shows a capsule manipulator 7 suspended on a mount 71 that is, preferably, arranged on the stand 12. The capsule manipulator includes a capsule transfer device 72. Using this latter, capsules can be moved between various stations. It is preferred that the stations should be arranged around a circular track so that the capsule transfer device can execute a rotary movement. However, it is, of course, also feasible to arrange the stations along a line and have the capsule transfer device move one capsule at a time linearly. If the rate is low, the foregoing is possible and entails a simpler construction. Nonetheless, a rotary movement is desirable as three capsules can then be handled simultaneously. It is preferred that this rotation is executed by a capsule transfer device 72 in the form of a rotary table.

The rotary table 72 above is suitably made of metal and of such dimensions that it is sufficiently rigid and durable for the present purposes. Furthermore, the rotary table 72 is pivoted relative to the mount 71 and, using a servomotor, is rotated around the vertical A-A axis to three different positions, preferably with 120 degrees between two adjacent positions. On the rotary table 72, there is a swivel 73 that can be used for the connection of compressed air and electricity. The rotary table also includes three gripping devices 74 evenly spaced around the circumference of the rotary table 72. Each gripping device 74 includes two gripping hands 75, preferably made of a light metal, each of the gripping hands preferably including two vertically aligned gripping strips of a rubber-like material.

Owing to the rubber's elasticity, variations in capsule diameter can be compensated for and the friction forces acting on the capsules are high. The gripping hands 75 are each suspended on their turning devices 77. Using these latter, the gripping hands can be rotated approximately 90 degrees around their vertical axes, it being thereby possible to close and open the gripping devices 74.

In figure 3, the rotary table 72 has been turned to such an angle that one gripping device 74 is in a position for feeding in, one gripping device is in a position for loading and one is in a position for feeding out. All three gripping devices 74 are here shown in an open position. However, in operation, the gripping device 74 that is above the collecting device 78 is in a closed position. This gripping device holds the capsule that is in the loading station 5. The collecting device 78 includes a funnel 79 attached to an arm 791, said arm being fixed relative to the mount 71. At the same time, the other gripping devices 74 in the input station 4 and the output station 6 can be in an open position to, respectively, receive or discharge their capsules.

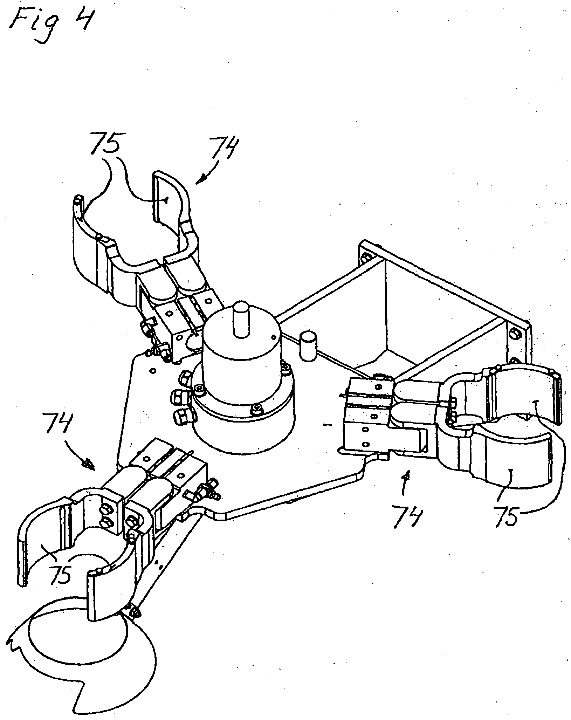

Figure 4 shows the rotary table 72 with the gripping devices 74 in a closed position. The rotation of the gripping hands is preferably effected by pneumatic turning devices 77, which are standard components in the present context.

It is preferred that movement of the capsules should be effected via a rotary table. This gives high positional accuracy with simple means. However, it is, of course, possible to have gripping devices 74 arranged on a circular or non-circular (e.g. elliptical or triangular) track. In such a design, the gripping devices could be suspended on a chain or belts. This could be suitable where the various stations are not at the corners of an equilateral triangle. In its simplest form, a rotary table presupposes such a triangular disposition. Where further stations are necessary, all the stations should, for the same reason, be spaced evenly around a circle. However, with a servo-controlled rotary table it is possible to have the stations unevenly spaced around a circle. In the preferred design, rotation is around a vertical axis. Nonetheless, rotation around another axis (e.g. horizontal) is also conceivable.

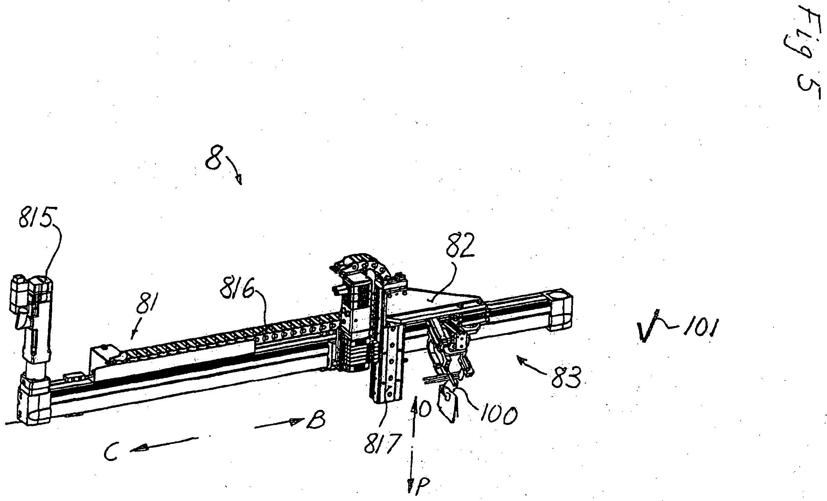

Figure 5 shows the picker 8. This includes a transfer unit 81, preferably a linear transfer device, that is fixed relative to the stand 12. The linear transfer device includes a servomotor 815 and a cable chain 816. On the moveable slider of the linear transfer device 81, there is a second linear transfer device 817. Using this latter, the gripping device 83 can be moved, via a mount 82, in the directions of arrows O and P. Using this arrangement, the gripping device 83 can also be moved in the directions of arrows B and C. The figure shows the gripping device 83 moving in the direction of arrow C with a ring 100 that has item bags for delivery to the loading station 5. The ring 100 has been collected from the hook 101 at the automated pharmacy's output unit (this hook is shown schematically). After collection, the gripping device 83 has turned around several axes to a position (as per the figure) relative to the mount 82. In this position it is ready to discharge the ring 100 to the gripping device 54 of the loader 5.

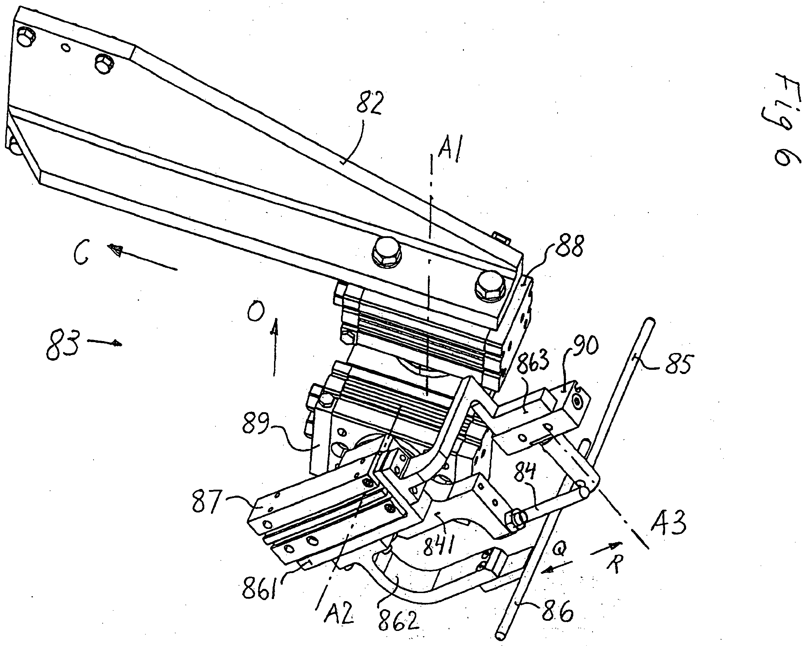

The composition and function of the gripping device 83 will now be described in greater detail using figures 6 to 9.

Figure 6 shows the mount 82 on which there is a turning device 88. There is a second turning device 89 attached to the pivot shaft of the first turning device 88, the second turning device 89 being thereby able to turn around axis A1. A mount 841 is attached to the pivot shaft of the turning device 89. A linear transfer device 87 is fixed to this mount. A capture organ, preferably in the form of a pin 84, is also attached to the mount 841. Through this arrangement, the linear transfer device 87 and pin 84 can turn around axes A1 and A2. Taking this together with the previously mentioned linear transfer devices 81 and 817, movement of pin 84 can have four degrees of freedom, two translations and two rotations. Consequently, the ring and its item bags can be collected and delivered with great precision. On the slider of the linear transfer device 87, there is a mount 861 that carries two arms 862 and 863. A stop organ 86, preferably in the form of a transverse pin, is attached to the end of arm 862. A turning device 90 is attached to the end of arm 863. On the pivot shaft of this turning device 90, there is a locking organ 85, preferably in the form of another transverse pin. Like a gate, this pin can be turned 180 degrees (between open and closed) around axis A3. In figure 6, pin 85 is shown in the open position. Via the linear transfer device 87, the stop organ 86 and the locking organ 85 can be moved linearly in the directions of arrows Q and R. The above-detailed parts are included in the gripping device 83 and are the vital components for being able to receive, position and deliver rings 100 and their item bags.

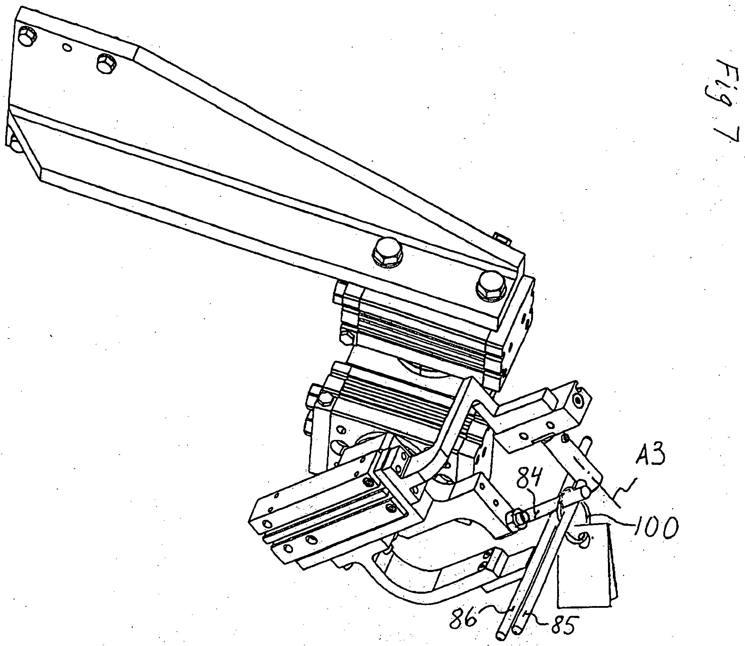

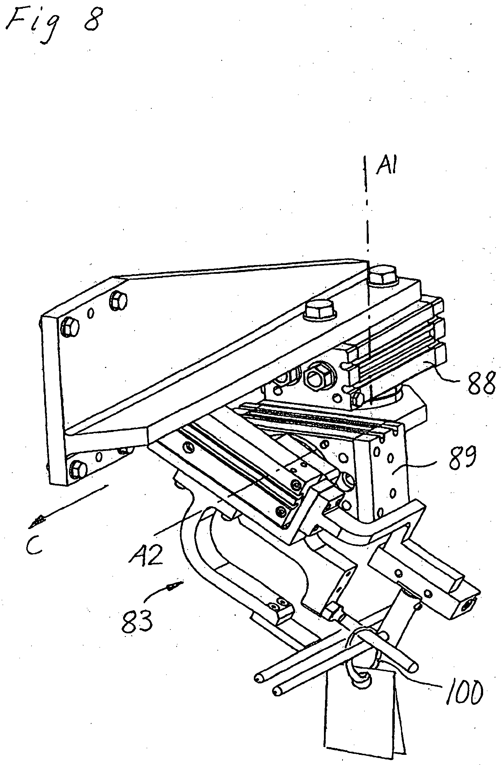

In figure 6, the gripping device is in a position to receive (on pin 84) a ring 100 from the automated pharmacy's output unit. After reception, the gripping device is closed through pin 85 being turned, by the turning device 90, around axis A3 until it is in the position shown in figure 7. The ring 100 is now suspended on pin 84 and locked between pins 85 and 86. In the direction of arrow C, linear transfer of the ring 100 to the loading station 5 then begins simultaneously with the gripping device 83 being turned around axes A1 and A2 to the position shown in figure 8. As previously described, this movement in the direction of arrow C uses the linear transfer unit 81.

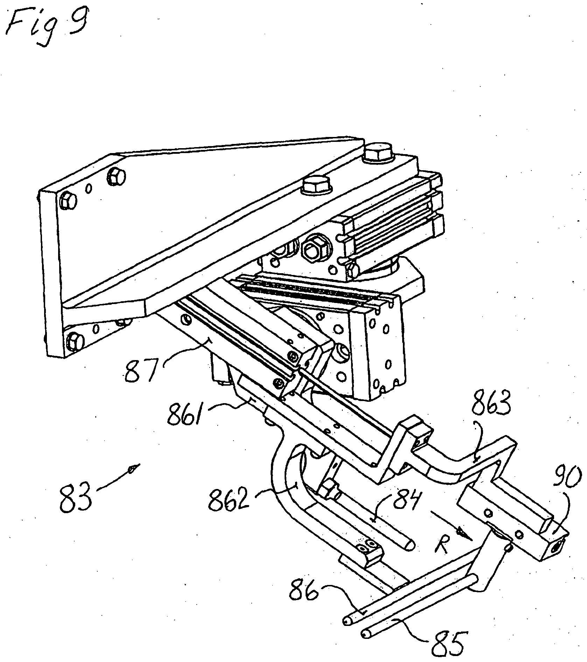

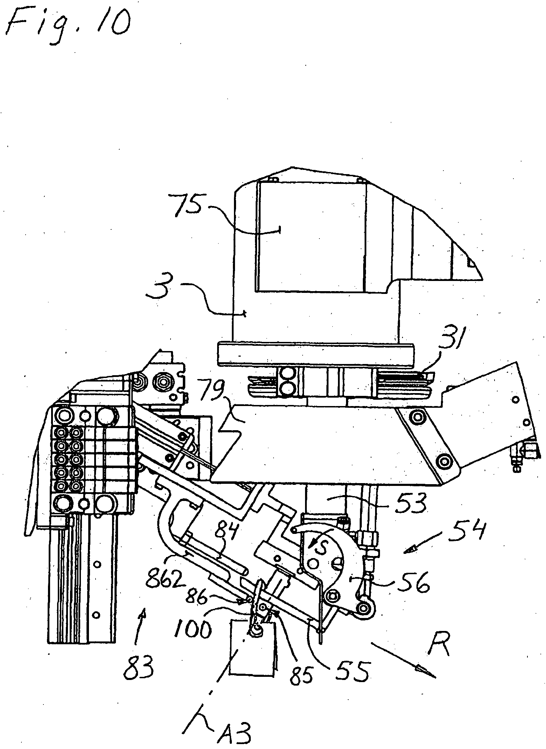

Figure 9 shows the gripping device 83 in a position where it has just delivered a ring 100 to the loader 5. The ring has been released from the gripping device 83 by being pushed off pin 84. This is effected through the linear transfer device 87 moving the mount 861 and the mount's two arms 862 and 863 in the direction of arrow R. This pushes pins 85 and 86 along pin 84 (in the direction of arrow R) to a position where the ring 100 falls off. As shown in figure 10, this releasing of the ring is effected in interaction with the gripping device 54 of the loader 51.

Figure 10 shows the lower part of the loading station 5 with a capsule 3 clamped by gripping hands 75, there being a funnel 79 under the capsule 3. When receiving a ring 100 and its items, the arm 53 of the loader 51 is inserted through the upper, open end piece (not shown in the figure) of the capsule 3 until it protrudes below the lower, open end piece of the capsule 3. The loader's gripping device 54 is on the end of the arm 53. This gripping device includes a capture organ 55, in the form of a finger or a pin, and, in the form of a U-piece, a locking organ 56 that is in an open position in the figure. At ring delivery, pin 84 of gripping device 83 is put into a position directly above pin 55 of gripping device 54. In this position, pin 84 projects over pin 55 so that they are slightly overlapped. As the ring 100 is locked on pin 84 by pins 85 and 86 (with only a little distance between pins 85 and 86), the ring 100 is guided so that its opening faces the longitudinal axis of pin 55. Consequently, the ring can be easily pushed off pin 84 onto pin 55. This is effected by pins 85 and 86 moving in the direction of arrow R (as previously described).

In the next step, the U-piece 56 is turned (in the direction of arrow S) to a locked position against pin 55 behind pin 86. Here, the bag is still locked between pins 85 and 86 when the U-piece 56 descends and closes against pin 55. Pins 85 and 86 then move further in the direction of arrow R, this pushing the ring 100 farther down on pin 55. Throughout this movement of the ring 100 in the direction of arrow R, the ring is secured on gripping device 54. Finally, pin 85 is turned around axis A3 to an open position and gripping device 83 is moved towards the automated pharmacy to collect yet another ring. Through this arrangement and procedure, the ring 100 is mechanically secured throughout transport from the automated pharmacy to a position ready for loading. Device 1 electronically collects information about whether there is another ring to go to the same address. If there is, the loader waits for the next ring. When gripping device 83 is once again in position to deliver a ring, the U-piece 56 opens and the new ring is then pushed on. The procedure is then repeated as previously described. The capsule 3 can accommodate a certain maximum number of rings. Where more rings than this are to go to the same address, they are shared between several capsules.

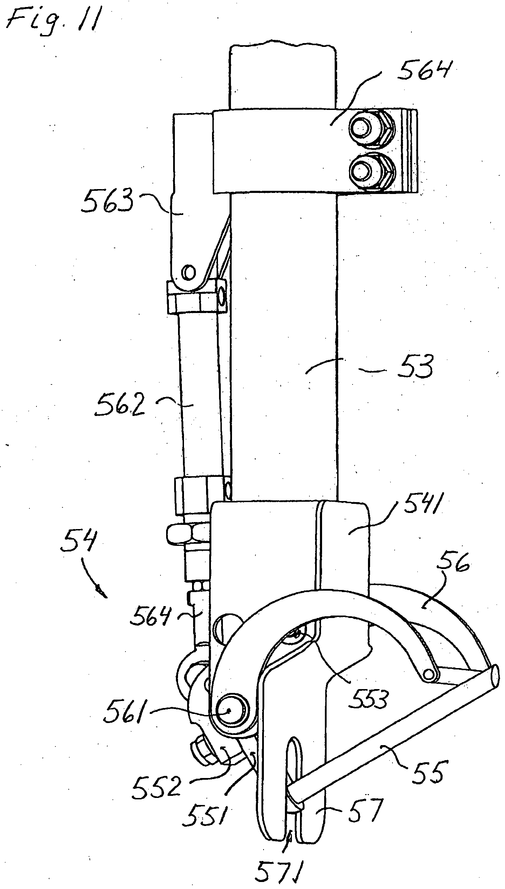

Figures 11 to 14 show the composition and function of the gripping device 54 of the loader 51 in more detail. The gripping device 54 is attached, preferably via a mount 541, to the lower part of a tubular arm 53. This arm 53 constitutes an organ via which the gripping device 54 can be inserted through one of the end pieces of the capsule until it protrudes through the other end piece, this being an essential aspect of the invention. It is preferred that this organ 53 should include an arm in the form of a tube and a mount 541 on the lower part of the arm. The gripping device 54 includes a capture organ 55, preferably a pin or a finger, attached to a support arm 551, said support arm being fixed to a pivot arm 552. This pivot arm 552 is pivoted around the shaft 553 of the mount 541. The gripping device 54 further includes a stop organ 57, preferably in the form of a shield with a through channel 571, finger 55 being able to move freely in said channel. The stop organ 57 limits the lateral movement of the ring 100. Via a link that is pivotally connected to the pivot arm 552 - said link being arranged inside the tube 53 - the movement of finger 55 is preferably effected using a linear transfer device on the upper part of the arm 53. The gripping device also includes a locking organ 56. This is so arranged that it can be moved towards the free end of capture organ 55, thereby providing a locking function. The locking organ preferably includes a U-piece, pivoted around the shaft 561 on the mount 541. The pivot motion of the U-piece 56 is preferably effected using a pivot arm connected to the piston rod 564 of a compressed air cylinder 562. This compressed air cylinder 562 is pivotally attached to a mount 563 on a tube clamp 564 that is attached to the arm 53.

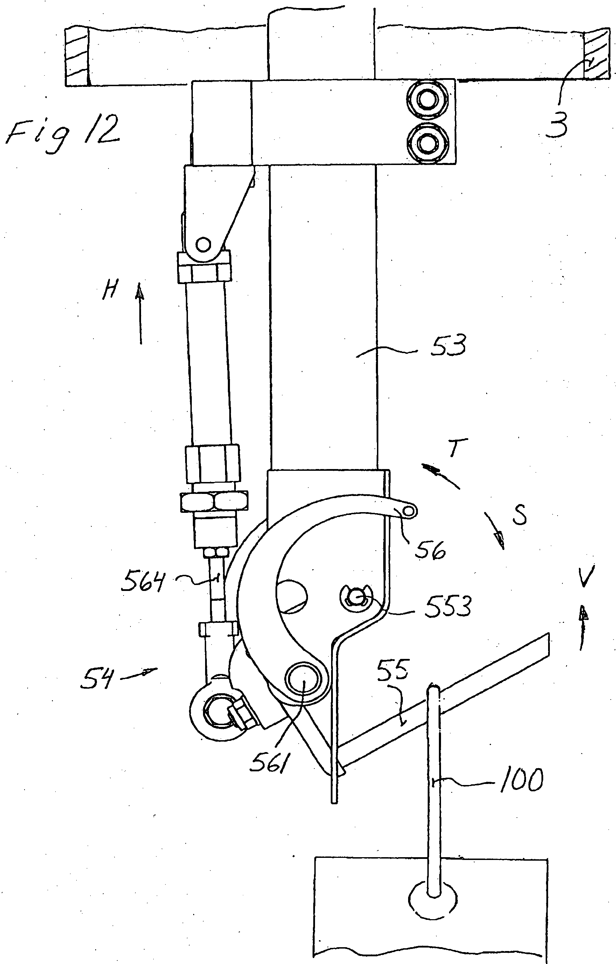

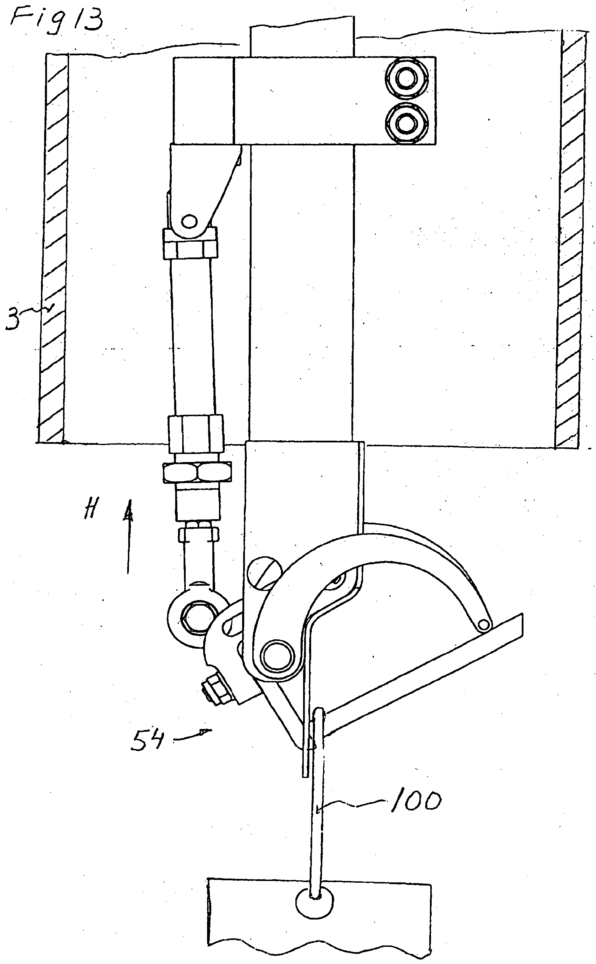

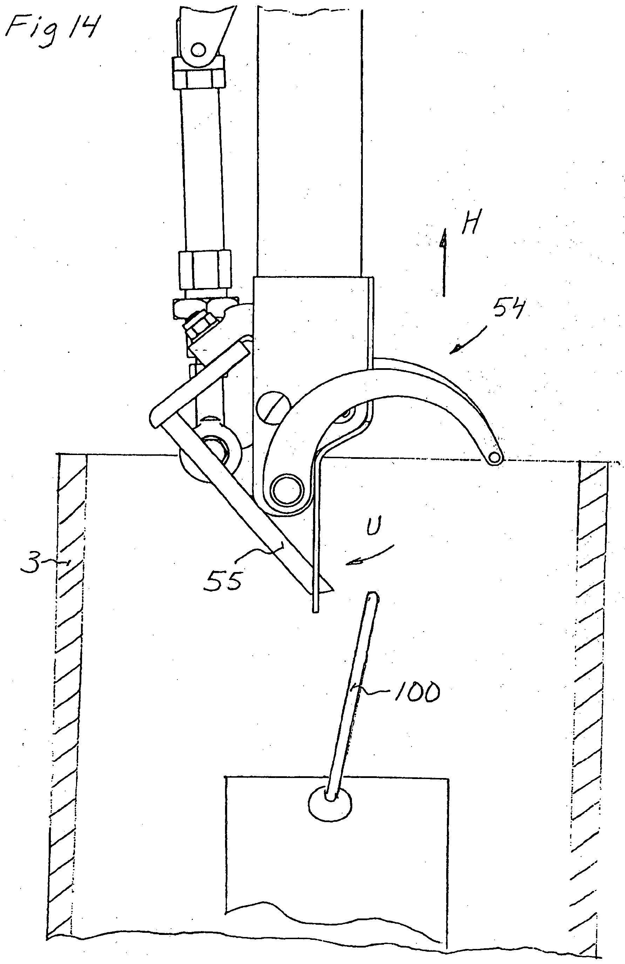

Figure 12 shows the gripping device 54 in a position, as per figure 10, where it has just received a ring 100. Here, the U-piece 56 has been turned in the direction of arrow T and pin 55 has been turned in the direction of arrow V (both to their respective upper end positions). Under the influence of the movement of pins 85 and 86 in a direction along pin 55, the ring 100 slides down onto pin 55. The U-piece can then be turned (in the direction of arrow S) to its locking position against pin 55. This secures the ring. In the direction of arrow H, the gripping device 54 can now be moved upwards towards and into the capsule 3 - as shown in figure 13. When the ring and its item bags have been entirely pulled into the capsule 3, the lower end piece of the capsule 3 is closed. As in figure 14, finger 55 is next turned in the direction of arrow U, then gripping device 54 thereby releasing the ring, or rings, which is/are then left in the capsule. Finally, the gripping device 54 is pulled upwards (in the direction of arrow H) and out of the capsule 3. The upper end piece can now be closed.

The composition and function of the gripping device 54 can be described in general terms as follows. The gripping device includes: a capture organ 55 with a free end; and, a locking organ 56 with another free end. These organs are independently mobile between two end positions so that the free end of organ 55 and that of organ 56 are in contact with each other in their respective end positions.

Just as the earlier described gripping device 83, gripping device 54 is adapted for an item carrier in the form of a ring 100. However, it can, of course, be designed in a number of ways within the framework of the concept embodied in the invention. For example, the gripping device could have two or more fingers that extend all the way through the capsule. A further possibility is a gripping device with two or more fingers that clamp an item carrier in such a way that the picker's gripping device takes hold of a certain part of the carrier and the loader's gripping device takes hold of another part of the carrier, it then being possible for the picker's gripping device to release its hold. However, it is preferred that the device never releases its grip on the item carrier before this latter is pulled inside a capsule. In this way, the carrier's position and orientation in space can be fully controlled, this being a basic requirement for achieving a safe and efficient handling of objects for transport in tube transport systems.

In the design preferred in the description above, it is assumed that the items to be handled in some way are packed in a carrier. However, it must be pointed out that it is, of course, possible to have unpackaged items that can be handled directly by gripping devices 83 and 54. Such handling can also be effected by gripping device 54 including: a suction cup that uses a vacuum to secure the object 100 or its packaging and pull it into the capsule; or, as previously mentioned, a magnet (for such items that can be acted on by magnets). The invention can also be used in many contexts other than that of automated pharmacies. However, common to many applications is that there are objects 100 that, in some way or other, are delivered by an address-giving unit and which must be moved using a tube transport system.

One of the description's focuses has been the principle for using gripping devices to handle item carriers and, in particular, how these latter are transported in a capsule. However, another important part of the invention is the capsule manipulator, which is particularly suitable for a capsule opening device.

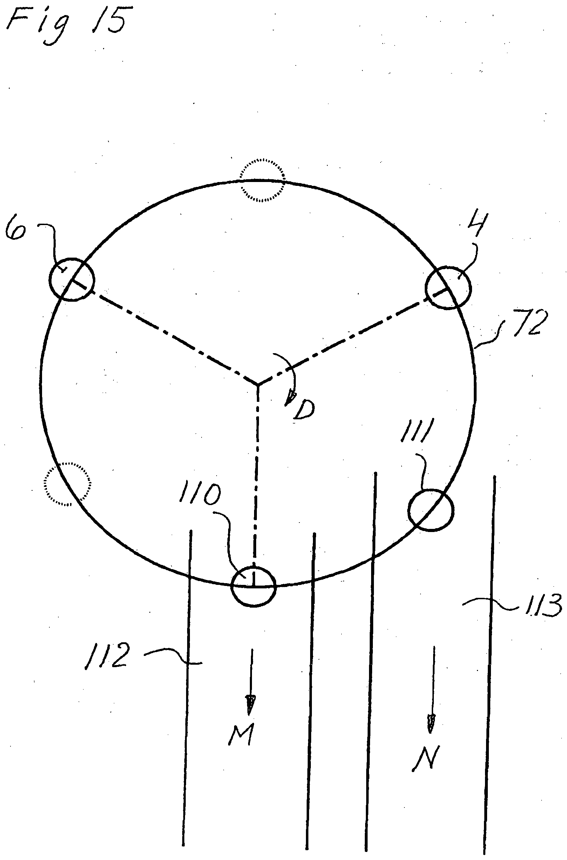

Hospital laboratories receive a rapid stream of samples that have to be handled efficiently. Where the hospital has a tube transport system, the samples most usually arrive via tube transport capsules. These capsules have to be opened and emptied. The samples have to be taken care of and sorted so that acute samples are given priority. Furthermore, the capsules must also be closed and sent into the tube transport system's empty capsule store. Besides being complex and taxing, this manual handling of capsules also takes up a great deal of space, In this context a capsule manipulator with essentially the same function as previously described is of great use. The contents of the capsule 3 have to be acted on so that they are emptied from the capsule. It has to be possible for emptying to take place at two different stations - a normal station and an acute station. In this design of the invention, the capsule manipulator 7 is (as previously) suitably arranged on a stand and includes a rotary table 72 that has three gripping devices 74 arranged around a circle and evenly spaced from each other. The gripping devices move capsules between various stations, the siting of which is shown schematically in figure 15. The input and output stations (4 and 6 respectively) are sited at 120 degrees to each other. The emptying station 110 for normal priority samples is sited at 120 degrees from the input station and the device can thus, in most cases, work at an even pace so that feeding in, emptying and feeding out can take place simultaneously. When the capsules arrive at the input station 4, they are rotated to an angle at which the end pieces can be opened as previously described. However, unlike the previously described design, the end pieces are not opened at this station. Instead, each capsule is gripped by the gripping device and moved to one of the emptying stations 110 or 111 where the end pieces are opened as previously described. Each emptying station includes an organ that acts on capsule contents. This organ is preferably in the form of a vertically mobile stamp that is pushed through the capsules from the top, the contents then falling onto their conveyor belt, 112 or 113, for further transport in the directions of arrows M and N respectively. Information on sample priority is linked to capsule identity, which is stored in each capsule's transponder and is read at the input station 4. When an acute sample arrives, it is received at the input station and then moved to the emptying station 111 for acute samples. This is sited at less than 120 degrees from the input station. This movement of the rotary table 72 can be effected by a servo-controlled turning device. When a capsule with an acute sample is emptied, the input and output stations (4 and 6 respectively) may be in standby mode. After emptying, the end pieces are closed in the same way as previously and, via the tube transport system, output station 6 returns the empty capsule to a storage place for empty capsules.

The first described design also includes a station 5 for acting on the contents of a capsule 3. The station 5 includes an organ 51 that acts upon the items with which the capsule is filled. This organ has been designated "loader".

Thus, common to both designs is that the capsule manipulator 7, in conjunction with the various stations, enables the implementation of a method for automatically acting on the contents of capsules 3 intended for tube transport systems, via which method several capsules can be handled 3 simultaneously. Using the capsule manipulator 7 and its station, capsules 3 can be handled as per the following method.

The capsule manipulator 7 grips at least three capsules and moves them to all three stations in the order: feeding in, acting on the contents and feeding out. Each time there is a capsule 3 at the input station 4, there is another capsule at the output station 6.

The unique nature of the invention has thus been described and, compared with previously known technologies, its advantages are many. It must be pointed out that it is the essentials of a preferred design that have been described here. For a professional experienced in the art of machine building, it will be obvious that the invention can be varied in many different ways, some of which have been briefly mentioned. There is a wealth of standard components for effecting transfers of various types. Many different arrangements for effecting physical transfers can be devised. Furthermore, control of the parts concerned can be executed in accordance with many known principles. All these variations, obvious for professionals in the area, are accommodated within the concept embodied in the invention, said concept being formulated in the following patent claims.

## Claims

1. **Method of automatic filling** of cylindrical capsules (3) with objects (100) that have given addresses;
- said capsules (3) configured and adapted for a pneumatic tube transport and each capsule (3) having two openable end pieces (31) and a transponder with readable information about this capsule's individual identity; **characterized by**
- a loading station (5) including a gripping device (54) and a transfer unit (52) and via the transfer unit (52) the gripping device (54) is automatically moved, relative to a capsule (3), in a first direction through a capsule's first end piece opening and grip an object (100) through a second end piece opening of the capsule (3) before then moving, relative to the capsule (3), in a second direction, thereby pulling the object (100) into the capsule (3) through the second end piece opening;
- the gripping device (54) then releasing the object (100) inside the capsule (3) and moving, relative to the capsule (3), out of the capsule's first end piece opening.

2. Method as per patent claim 1, wherein end piece closing organs, preferably linear transfer devices, automatically close the end pieces (31) after an object (100) has been entirely pulled into a corresponding capsule (3).

3. Method as per patent claim 1 or 2, wherein a picker (8) automatically picks an object (120) and delivers it to the gripping device (54) of the loading station (5).

4. Method as per patent claim 1, 2 or 3 wherein a device receives information about the address of the object (100) inserted in the capsule (3), and a reading unit reads the identity of the capsule (3); and wherein the received address is combines the read capsule identity and this combined information is sent a tube transport system for pneumatic tube transport of the capsules (3).

5. Method per any of the above patent claims 1 to 4, wherein an input station (4) is arranged in connection with a tube transport system's tube for pneumatic tube transport for incoming capsules (3), said input station automatically receiving and preparing a capsule (3) for being filled with objects (100), this reception and preparation being capable, under the influence of control signals, of taking place simultaneously with the loading station (5) filling a previously received capsule (3) with an object (100).

6. Method as per patent claim 5, wherein an output station (6) is arranged in connection with the tube transport system's tube for outgoing capsules (3), said output station automatically delivering a filled capsule (3) to the tube transport system's tube for outgoing capsules, this delivery being under the influence of control signals, of taking place simultaneously with the loading station (5) filling another capsule (3) with an object (100).

7. Method as per patent claim 6, wherein a capsule transfer device (72), preferably a rotary table that includes three gripping devices (74) evenly spaced around the circumference of the rotary table (72), moves the capsules (3) between the stations (4, 5, 6).

8. **Device for operating** the method of one of prior claims,
- the device (1) including a loading station (5) for the automatic filling of cylindrical capsules (3) with objects (100) that have given addresses, said capsules (3) being suitable for pneumatic tube transport systems and each capsule (3) including two openable end pieces (31) and a transponder with a readable information about an individual capsule's identity;
- wherein the loading station (5) includes a gripping device (54) and a transfer unit (52), via which latter the gripping device (54) is automatically moveable, relative to a capsule (3), in a first direction through a capsule's first end piece opening for gripping an object (100) through the second end piece opening of the capsule (3) before then being moveable relative to the capsule (3) in a second direction, configured to pull the object (100) into the capsule (3) through its second end piece opening;
- the gripping device (54) being configured to then release the object (100) inside the capsule (3) and being moveable then relative to the capsule (3), out of the capsule's first end piece opening;
- the device (1) including end piece closing organs that are configured to automatically close the end pieces (31) after a respective object (100) has been entirely pulled into the capsule (3).

9. Device as per patent claim 8, **characterized by** the end piece closing organs being linear transfer devices, that are configured to, after the respective object (100) has been entirely pulled into the capsule (3), automatically close the end pieces (31).

10. Device as per patent claim 8 or 9, **characterized by** including a picker (8) for automatically picking an object (100) and to deliver same to the gripping device (54) of the loading station (5).

11. Device as per one of patent claims 8 to 10, **characterized by** the device (1) including a device for receiving information about the address of the object (100) inserted in the capsule (3), the first said device (1) also including a reading unit, via which latter the identity of the capsule (3) can be read, said first device (1) being able to combine the received address with the read capsule identity and send this combined information to the tube transport system.

12. Device as per one of the above patent claims 8 to 11, **characterized by** the device (1) including an input station (4) that is arranged to be in connection with the tube transport system's tube for incoming capsules (3), said input station being able to automatically receive and prepare a capsule (3) for being filled with objects (100), this reception and preparation being capable, under the influence of control signals, of taking place simultaneously with the loading station (5) filling a previously received capsule (3) with an object (100).

13. Device as per prior patent claim, **characterized by** the device (1) including an output station (6) that is arranged to be in connection with the tube transport system's tube for outgoing capsules (3), said output station being able to automatically deliver a filled capsule (3) to the tube transport system's tube for outgoing capsules, this delivery being capable, under the influence of control signals, of taking place simultaneously with the loading station (5) filling another capsule (3) with an object (100).

14. Device as per prior patent claim, **characterized by** the device (1) including a capsule transfer device (72), preferably a rotary table, that includes three gripping devices (74) evenly spaced around the circumference of the rotary table (72), via which device capsules (3) are movable between the stations (4, 5, 6).

## Patentansprüche

1. **Verfahren zum automatischen Befüllen** von zylindrischen Kapseln (3) mit Objekten (100), die vorgegebene Adressen haben;
- diese Kapseln (3) sind konfiguriert und geeignet für einen pneumatischen Rohrtransport und jede Kapsel (3) hat zwei öffnungsfähige Endstücke (31) und einen Transponder mit auslesbaren Informationen über die individuelle Identität der jeweilige Kapsel, **gekennzeichnet durch** eine
- Ladestation (5) mit einer Greifvorrichtung (54) und einer Weitergabeeinheit (52), wobei die Greifvorrichtung (54) automatisch durch die Weitergabeeinheit (54) relativ zu einer Kapsel (3) in eine erste Richtung **durch** eine erste Kapselendstücköffnung bewegt wird und ein Objekt (100) **durch** eine zweite Endstücköffnung der Kapsel (3) greift, bevor sie sich dann relativ zur Kapsel (3) in eine zweite Richtung bewegt und dabei das Objekt (100) **durch** die zweite Endstücköffnung in die Kapsel (3) hineinzieht;
- die Greifvorrichtung (54) lässt dann das Objekt (100) innerhalb der Kapsel (3) los und bewegt sich relativ zur Kapsel (3) aus der ersten Kapselendstücköffnung heraus.

2. Verfahren nach dem Patentanspruch 1, wobei Endstück-Schließorgane, bevorzugt lineare Übertragungsvorrichtungen, die Endstücke (31) automatisch verschließen, nachdem ein Objekt (100) vollständig in die jeweilige Kapsel (3) gezogen wurde.

3. Verfahren nach einem der Patentansprüche 1 oder 2, wobei ein Aufnehmer (8) automatisch ein Objekt (120) aufnimmt und es zu der Greifvorrichtung (54) der Ladestation (5) liefert.

4. Verfahren nach einem der Patentansprüche 1, 2 oder 3, wobei ein Gerät Informationen über die Adresse des in die Kapsel (3) eingegebenen Objekts (100) erhält, und eine Leseeinheit die Identität der Kapsel (3) ausliest; wobei die erhaltene Adresse mit der ausgelesen Identität der Kapsel kombiniert wird und diese kombinierte Information zu einem Rohrtransportsystem für einen pneumatischen Rohrtransport der Kapseln (3) gesendet wird.

5. Verfahren nach einem der Patentansprüche 1 bis 4, wobei eine Eingabestation (4) in Verbindung mit einem Rohr des Rohrtransportsystems für den pneumatischen Rohrtransport für ankommende Kapseln (3) arrangiert ist, wobei diese Eingabestation eine Kapsel (3) automatisch empfängt und für das Befüllen mit Objekten (100) vorbereitet, wobei dieses Empfangen und die Vorbereitung unter dem Einfluss von Steuersignalen simultan mit dem Befüllen einer vorher erhaltenen Kapsel (3) mit einem Objekt (100) stattfinden kann.

6. Verfahren nach dem Patentanspruch 5, wobei eine Ausgabestation (6) in Verbindung mit einem Rohr des Rohrtransportsystems für den pneumatischen Rohrtransport für ausgehende Kapseln (5) arrangiert ist, wobei diese Ausgabestation automatisch eine gefüllte Kapsel (3) zu dem Rohr des Rohrtransportsystems für ausgehende Kapseln liefert, wobei diese Lieferung unter dem Einfluss von Steuersignalen simultan mit dem Befüllen einer anderen Kapsel (3) mit einem Objekt (100) in der Ladestation (5) stattfinden kann.

7. Verfahren nach dem Patentanspruch 6, wobei eine Kapsel-Weitergabe-Vorrichtung (72), vorzugsweise ein Drehtisch mit drei Greifvorrichtungen (74), die in gleichen Abständen um den Umfang des Drehtisches (72) angeordnet sind, die Kapseln (3) zwischen den Stationen (4, 5, 6) bewegt.

8. **Vorrichtung zum Ausführen** des Verfahrens nach einem der vorhergehenden Ansprüche,
- die Vorrichtung (1) umfasst eine Ladestation (5) zum automatischen Befüllen von zylindrischen Kapseln (3) mit Objekten (100) denen Adressen gegeben wurden, wobei diese Kapseln (3) für ein pneumatisches Rohrtransportsystem geeignet sind und jede Kapsel (3) zwei öffnungsfähige Endteile (31) und einen Transponder mit lesbaren Informationen über eine individuelle Kapselidentität umfasst;
- wobei die Ladestation (5) eine Greifvorrichtung (54) und eine Weitergabeeinrichtung (52), über welche die Greifvorrichtung (54) zum Greifen eines Objekts (100) automatisch relativ zu einer Kapsel (3) in eine erste Richtung durch eine erste Kapselendstück-Öffnung bewegbar ist, umfasst, um ein Objekt (100) durch eine zweite Endstücköffnung der Kapsel (3) zu greifen, bevor sie dann relativ zur Kapsel (3) in eine zweite Richtung bewegbar ist, geeignet das Objekt (100) dabei durch die zweite Endstücköffnung in die Kapsel (3) hineinzuziehen;
- wobei die Greifvorrichtung (54) ausgebildet ist, das Objekt (100) innerhalb der Kapsel (3) loszulassen und dann relativ zur Kapsel (3) aus der ersten Kapselendstück-Öffnung heraus zu bewegen;
- wobei die Vorrichtung (1) Endstück-Schließorgane umfasst, die ausgebildet sind, die Endstücke (31) automatisch zu schließen, nachdem ein entsprechendes Objekt (100) vollständig in die Kapsel (3) hinein gezogen wurde.

9. Vorrichtung nach dem Patentanspruch 8, **gekennzeichnet dadurch, dass** die Endstückschließorgane lineare Übertragungsvorrichtungen sind, die geeignet sind, die Endstücke (31) automatisch zu verschließen, nachdem das entsprechende Objekt (100) vollständig in die Kapsel (3) hineingezogen wurde.

10. Vorrichtung nach einem der Patentansprüche 8 oder 9, gekennzeichnet ferner durch einen Aufnehmer (8) zum automatischen Aufnehmen eines Objekts (100) und zum Liefern desselben zu der Greifvorrichtung (54) der Ladestation (5).

11. Vorrichtung nach einem der Patentansprüche 8 bis 10, **gekennzeichnet dadurch, dass** die Vorrichtung (1) ein Gerät zum Empfang von Informationen über die Adresse des Objekts (100), das in die Kapsel (3) eingegeben ist, umfasst, wobei die Vorrichtung (1) zusätzlich eine Leseeinheit umfasst, über die die Identität der Kapsel (3) gelesen werden kann, wobei die Vorrichtung (1)fähig ist, die erhaltene Adresse mit der Kapselidentität zu kombinieren und diese kombinierte Information an das Rohrtransportsystem zu senden.

12. Vorrichtung nach einem der vorhergehenden Patentansprüche 8 bis 11, **gekennzeichnet dadurch, dass** die Vorrichtung (1) eine Eingabestation (4) umfasst, die so arrangiert ist, dass sie mit dem Rohr des Rohrtransportsystems für ankommende Kapseln (3) in Verbindung steht, wobei diese Eingabestation fähig ist, eine Kapsel (3) automatisch zu empfangen und zum Befüllen mit Objekten (100) vorzubereiten, wobei dieses Empfangen und Herrichten unter dem Einfluss von Steuersignalen simultan mit dem Befüllen einer vorher erhaltenen Kapsel (3) mit einem Objekt (100) in der Ladestation (5) erfolgen kann.

13. Vorrichtung nach dem vorhergehenden Patentanspruch, **gekennzeichnet dadurch, dass** die Vorrichtung (1) eine Ausgabestation (6) umfasst, die so arrangiert ist, dass sie mit dem Rohr des Rohrtransportsystems für ausgehende Kapseln (3) in Verbindung steht, wobei diese Ausgabestation fähig ist, eine Kapsel (3) automatisch an das Rohr der Rohrtransportsystems für ausgehende Kapseln zu liefern, wobei diese Lieferung unter dem Einfluss eines Steuersignals simultan mit dem Befüllen einer anderen Kapsel (3) mit einem Objekt (100) in der Ladestation (5) erfolgen kann.

14. Vorrichtung nach dem vorhergehenden Patentanspruch, **gekennzeichnet dadurch, dass** die Vorrichtung (1) ein Kapsel-Weitergabegerät (72), vorzugsweise einen Drehtisch, umfasst, der drei Greifvorrichtungen (74) umfasst, die am Umfang des Drehtisches (72) in gleichen Abständen angeordnet sind, und Kapseln (3) mittels des Geräts zwischen den Stationen (4, 5, 6) bewegbar sind.

## Revendications

1. **Méthode de remplissage automatique** de capsules cylindriques (3) avec des objets (100) possédant des adresses données;
- lesdites capsules (3) étant configurées et adaptées pour un transport par tube pneumatique et chaque capsule (3) présentant deux éléments d'extrémité pouvant être ouverts (31) et un transpondeur à informations lisibles sur l'identité de cette capsule individuelle, **caractérisée par**:
- une station de chargement (5) comprenant un dispositif de préhension (54) et une unité de transfert (52) et, par l'intermédiaire de l'unité de transfert (52), le dispositif de préhension (54) est déplacé automatiquement, par rapport à une capsule (3), dans une première direction à travers une première ouverture d'élément d'extrémité de la capsule et saisit un objet (100) à travers une deuxième ouverture d'élément d'extrémité de la capsule (3) avant de se déplacer ensuite, par rapport à la capsule (3), dans une deuxième direction, tirant de ce fait l'objet (100) dans la capsule (3) à travers la deuxième ouverture d'élément d'extrémité;
- le dispositif de préhension (54) relâche alors l'objet (100) à l'intérieur de la capsule (3) et se déplace, par rapport à la capsule (3), hors de la première ouverture d'élément d'extrémité de la capsule.

2. Méthode selon la revendication de brevet 1, dans laquelle des organes de fermeture d'élément d'extrémité, de préférence des dispositifs de transfert linéaires, ferment automatiquement les éléments d'extrémité (31) après qu'un objet (100) ait été tiré entièrement dans une capsule correspondante (3).

3. Méthode selon la revendication de brevet 1 ou 2, dans laquelle un préleveur (8) prélève automatiquement un objet (120) et délivre celui-ci au dispositif de préhension (54) de la station de chargement (5).

4. Méthode selon la revendication de brevet 1, 2, ou 3, dans laquelle un dispositif reçoit des informations relatives à l'adresse de l'objet (100) inséré dans la capsule (3), et une unité de lecture lit l'identité de la capsule (3); dans laquelle l'adresse reçue est combinée avec l'identité lue de la capsule et ces informations combinées sont envoyées à un système de transport par tube pour un transport par tube pneumatique des capsules (3).

5. Méthode selon l'une quelconque des revendications de brevet 1 à 4, dans laquelle une station d'entrée (4) est agencée en connexion avec un tube du système de transport par tube pour un transport par tube pneumatique des capsules entrantes (3), ladite station d'entrée recevant et préparant automatiquement une capsule (3) à remplir avec des objets (100), cette réception et cette préparation pouvant, sous l'influence de signaux de commande, être exécutées simultanément au remplissage par la station de chargement (5) d'une capsule reçue précédemment (3) avec un objet (100).

6. Méthode selon la revendication de brevet 5, dans laquelle une station de sortie (6) est agencée en connexion avec le tube du système de transport par tube pour des capsules sortantes (3), ladite station de sortie délivrant automatiquement une capsule remplie (3) au tube du système de transport par tube pour les capsules sortantes, cette délivrance pouvant, sous l'influence de signaux de commande, être exécutée simultanément au remplissage par la station de chargement (5) d'une autre capsule (3) avec un objet (100).

7. Méthode selon la revendication de brevet 6, dans laquelle un dispositif de transfert de capsule (72), de préférence une table rotative comprenant trois dispositifs de préhension (74) uniformément espacés autour de la circonférence de la table rotative (72), déplace les capsules (3) entre les stations (4, 5, 6).

8. **Dispositif de mise** en oeuvre de la méthode selon l'une des revendications précédentes, **caractérisé par**:
- le dispositif (1) comprenant une station de chargement (5) pour le remplissage automatique de capsules cylindriques (3) avec des objets (100) possédant des adresses données, lesdites capsules (3) étant appropriées pour des systèmes de transport par tube pneumatique, et chaque capsule (3) présentant deux éléments d'extrémité pouvant être ouverts (31) et un transpondeur à informations lisibles sur l'identité de la capsule individuelle,
- dans lequel la station de chargement (5) comprend un dispositif de préhension (54) et une unité de transfert (52) et, par l'intermédiaire de cette dernière, le dispositif de préhension (54) peut être déplacé automatiquement, par rapport à la capsule (3), dans une première direction à travers une première ouverture d'élément d'extrémité de la capsule afin de saisir un objet (100) à travers la deuxième ouverture d'élément d'extrémité de la capsule (3) avant de pouvoir se déplacer ensuite, par rapport à la capsule (3), dans une deuxième direction, configurée pour tirer l'objet (100) dans la capsule (3) à travers l'ouverture de son deuxième élément d'extrémité;
- le dispositif de préhension (54) étant configuré de manière à relâcher ensuite l'objet (100) à l'intérieur de la capsule (3) et pouvant ensuite être déplacé par rapport à la capsule (3) hors de la première ouverture d'élément d'extrémité de la capsule;
- le dispositif (1) comprenant des organes de fermeture d'élément d'extrémité qui sont configurés de manière à fermer automatiquement les éléments d'extrémité (31) après qu'un objet respectif (100) ait été tiré entièrement dans la capsule (3).

9. Dispositif selon la revendication de brevet 8, **caractérisé par** des organes de fermeture d'élément d'extrémité qui sont des dispositifs de transfert linéaires, et qui sont configurés pour, après que l'objet respectif (100) ait été tiré entièrement dans la capsule (3), fermer automatiquement les éléments d'extrémité (31).

10. Dispositif selon la revendication de brevet 8 ou 9, **caractérisé en ce qu'**il comprend un préleveur (8) pour prélever automatiquement un objet (100) et délivrer celui-ci au dispositif de préhension (54) de la station de chargement (5).

11. Dispositif selon l'une des revendications de brevet 8 à 10, **caractérisé en ce que** le dispositif (1) comprend un dispositif pour recevoir des informations relatives à l'adresse de l'objet (100) inséré dans la capsule (3), ledit premier dispositif (1) comprenant également une unité de lecture, par l'intermédiaire de laquelle l'identité de la capsule (3) peut être lue, ledit premier dispositif (1) étant capable de combiner l'adresse reçue avec l'identité lue de la capsule et d'envoyer ces informations combinées au système de transport par tube.

12. Dispositif selon l'une des revendications de brevet 8 à 11, **caractérisé en ce que** le dispositif (1) comprend une station d'entrée (4) qui est agencée de manière à se trouver en connexion avec le tube du système de transport par tube pour des capsules entrantes (3), ladite station d'entrée étant capable de recevoir et de préparer automatiquement une capsule (3) à remplir avec des objets (100), cette réception et cette préparation pouvant, sous l'influence de signaux de commande, être exécutées simultanément au remplissage par la station de chargement (5) d'une capsule reçue précédemment (3) avec un objet (100).

13. Dispositif selon la revendication de brevet précédente, **caractérisé en ce que** le dispositif (1) comprend une station de sortie (6) qui est agencée de manière à se trouver en connexion avec le tube du système de transport par tube pour des capsules sortantes (3), ladite station de sortie étant capable de délivrer automatiquement une capsule remplie (3) au tube du système de transport par tube pour des capsules sortantes, cette délivrance pouvant, sous l'influence de signaux de commande, être exécutée simultanément au remplissage par la station de chargement (5) d'une autre capsule (3) avec un objet (100).

14. Dispositif selon la revendication de brevet précédente, **caractérisé en ce que** le dispositif (1) comprend un dispositif de transfert de capsule (72), de préférence une table rotative, qui comprend trois dispositifs de préhension (74) uniformément espacés autour de la circonférence de la table rotative (72), dispositif par l'intermédiaire duquel les capsules (3) peuvent être déplacées entre les stations (4, 5, 6).
